# EUROPEAN PATENT SPECIFICATION

(11) **EP 2 672 865 B1**
(45) Date of publication and mention of the grant of the patent: **05.08.2015**
(21) Application number: 12702265.5
(22) Date of filing: 03.02.2012
(51) Int. Cl.: A47J 31/44

(54) **MIXING, HEATING AND/OR FROTHING DEVICE FOR MACHINES FOR PREPARING HOT BEVERAGES, PARTICULARLY FOR PREPARING CAPPUCCINO**
VORRICHTUNG ZUM MISCHEN, AUFWÄRMEN UND/ODER AUFSCHÄUMEN FÜR MASCHINEN ZUR ZUBEREITUNG HEISSER GETRÄNKE, INSBESONDERE ZUR HERSTELLUNG VON CAPPUCCINO
DISPOSITIF DE MÉLANGE, DE CHAUFFAGE ET/OU DE FORMATION DE MOUSSE POUR MACHINES DE PRÉPARATION DE BOISSONS CHAUDES, EN PARTICULIER DE CAPPUCCINO

(30) Priority: 09.02.2011 IT MI20110189
(43) Date of publication of application: 18.12.2013
(73) Proprietor: Swiss Caffe Asia Ltd, Hong Kong (HK)
(72) Inventor: CHENG, Rocky, Hong Kong (CN)
(74) Representative: Modiano, Micaela Nadia
(86) International application number: PCT/EP2012/051837
(87) International publication number: WO 2012/107357

(56) References cited:
- EP-A1- 1 312 292
- EP-A1- 2 220 972
- EP-A1- 2 275 010
- WO-A1-2005/074770
- DE-U1-202009 013 064

## Description

The present invention relates to a mixing, heating and/or frothing device for machines for preparing hot beverages, particularly for preparing cappuccino.

It is known that the machines for preparing coffee are provided with a device for dispensing steam at high temperature with which the milk is heated and/or frothed in order to prepare hot beverages such as, for example, cappuccino or warm milk.

In this field, this device is known as "frother".

Conventional frothers comprise a tubular element in which the inlet end is associated with a source of steam at high temperature and the outlet end is provided with a nozzle for dispensing the steam.

Conventional frothers comprise, moreover, a valve for controlling and adjusting the flow of steam which is provided with an actuation knob.

During use, an operator manually arranges the tubular element inside a container, of the type of a glass, jug or the like, that contains cold milk and arranges the nozzle below or at the free surface of the milk, depending on whether he/she intends to warm it or to also froth it, i.e., produce a surface layer of froth.

The operator then opens the valve and adjusts it according to his/her own sensibility so as to obtain in output from the nozzle a stream of steam that is suitable for the case. In particular, in order to obtain frothed milk, the operator opens and closes repeatedly the valve while he/she moves the container of milk toward and away from the nozzle, so that the stream of steam incorporates air in order to form the froth.

These conventional frothers, however, suffer some drawbacks, among which it should be noted that the production of warm milk or frothed milk depends on the sensibility and experience that the operator has in arranging the nozzle at the right level and in adjusting the opening degree of the valve.

Another drawback of conventional frothers consists in that they operate with the tubular element arranged vertically or at most obliquely, and this imposes design and construction constraints of the machines to which they are applied.

A further drawback of conventional frothers consists in that residues of milk and dirt accumulate on the outer surface of the tubular element and of the nozzle which must be removed manually with the aid of sponges and cleaning liquids. These operations do not ensure, however, a high and safe degree of hygiene, and therefore harmful bacterial colonies may develop from the residues of milk and dirt.

In order to obviate these drawbacks, in recent years, a frother has been developed which comprises a tubular body inside which a Venturi tube is defined which has an inlet end that can be associated with a source of steam and an outlet end.

Moreover a mixing chamber is provided, which is defined between the converging portion and the diverging portion of the Venturi tube, that is connected to at least one milk feed duct, which has a draft port that can be associated with a reservoir of milk and a port for introducing the milk in the mixing chamber.

The milk is thus drawn into the mixing chamber due to the partial vacuum created by the stream of steam between the converging portion and the diverging portion of the Venturi tube.

Moreover, this conventional type of frother also comprises a duct for feeding ambient air, which has an inlet adapted to be connected to the outside environment and an inlet for introducing air into the mixing chamber.

In this manner, the air is drawn into the mixing chamber due to the partial vacuum created by the stream of steam between the converging portion and the diverging portion of the Venturi tube.

Finally, this conventional frother comprises a valve which is associated with the air feed duct in order to open and close the air inlet.

This conventional frother is not devoid of drawbacks, including the fact that the actuation of the valve associated with the duct for feeding air occurs manually by the operator, an operation that makes the quality of the obtained beverage depend again on the sensitivity and experience of the operator in arranging the nozzle at the right level and in adjusting the degree of opening of the valve. The document DE-202009013064 U discloses a milk frother.

The aim of the present invention is to provide a mixing, heating and/or frothing device for machines for preparing hot beverages, particularly for preparing cappuccino, the operation of which is regular, constant and independent of the sensitivity and experience of an operator, thus allowing to obtain milk that is hot and/or frothed to a preset degree.

Within this aim, an object of the present invention is to provide a frother that minimizes the influence of the operator in obtaining the beverage.

Another object of the present invention is to devise a frother that is versatile and flexible in use and can be easily fitted on any machine for the production of hot beverages without requiring particular modifications or interventions for adaptation.

Another object of the present invention is to devise a frother that has a simple structure, is relatively easy to provide in practice, safe in use and effective in operation, as well as relatively low in cost.

This aim and these and other objects are all achieved by the present mixing, heating and/or frothing device for machines for preparing hot beverages, particularly for preparing cappuccino, comprising the features of claim 1.

Further characteristics and advantages of the present invention will become better apparent from the detailed description of a preferred but not exclusive embodiment of a mixing, heating and/or frothing device for machines for preparing hot beverages, particularly for preparing cappuccino, according to the invention, illustrated by way of non-limiting example in the accompanying drawings, wherein:

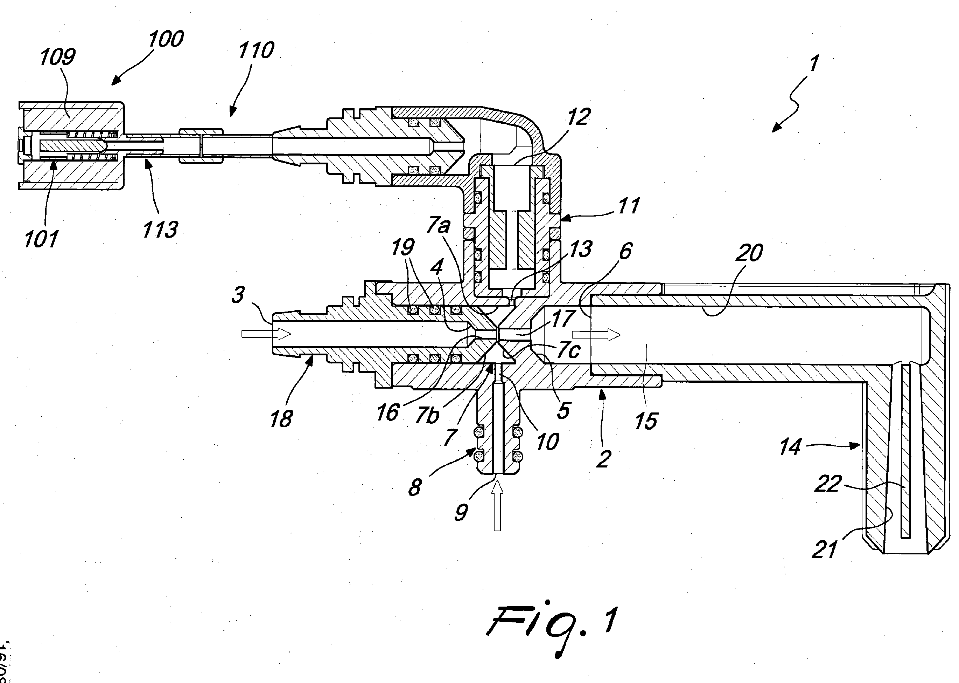

Figure 1 is a sectional side elevation view of an embodiment of a mixing, heating and/or frothing device for machines for preparing hot beverages, particularly for preparing cappuccino, according to the present invention, in a configuration for preparing hot beverages without froth;

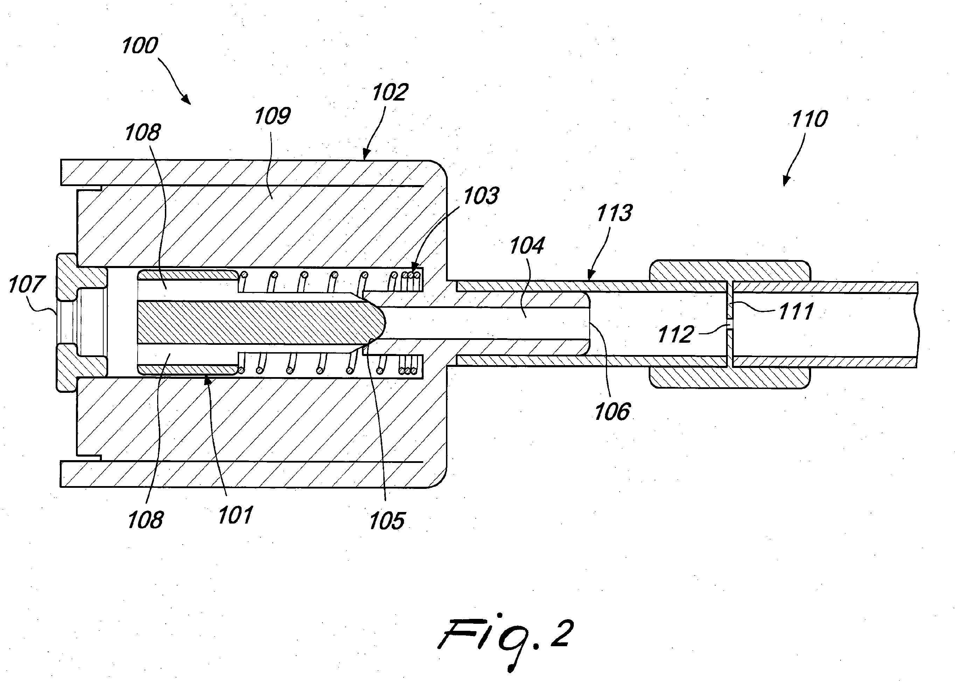

Figure 2 is an enlarged-scale view of a detail of the flow control means of the device illustrated in Figure 1;

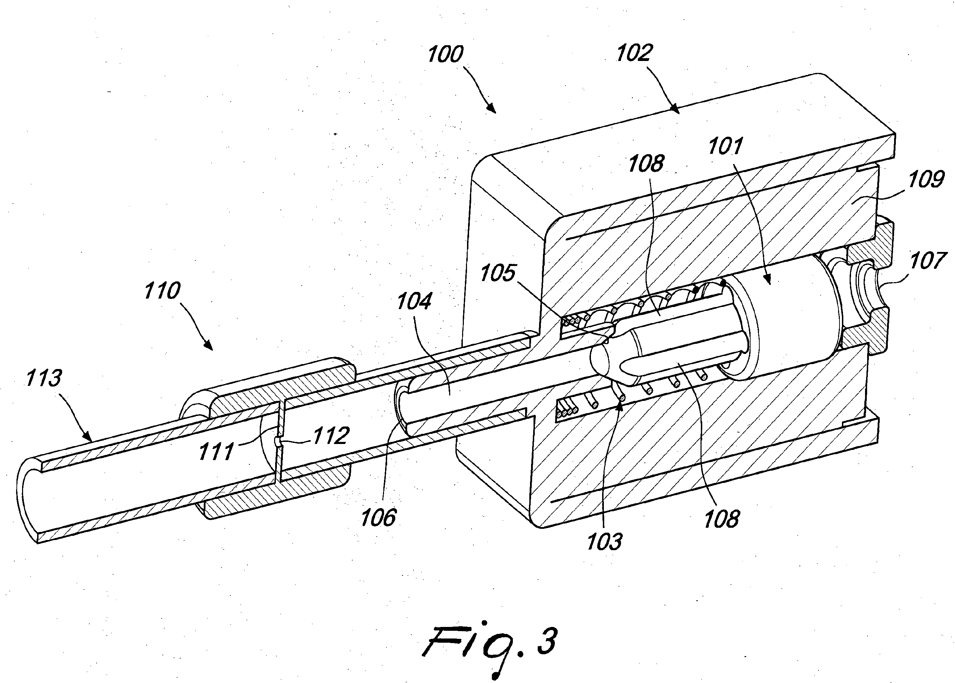

Figure 3 is a partially sectional perspective view of the flow control means illustrated in Figure 2 in their configuration for preparing hot beverages without froth;

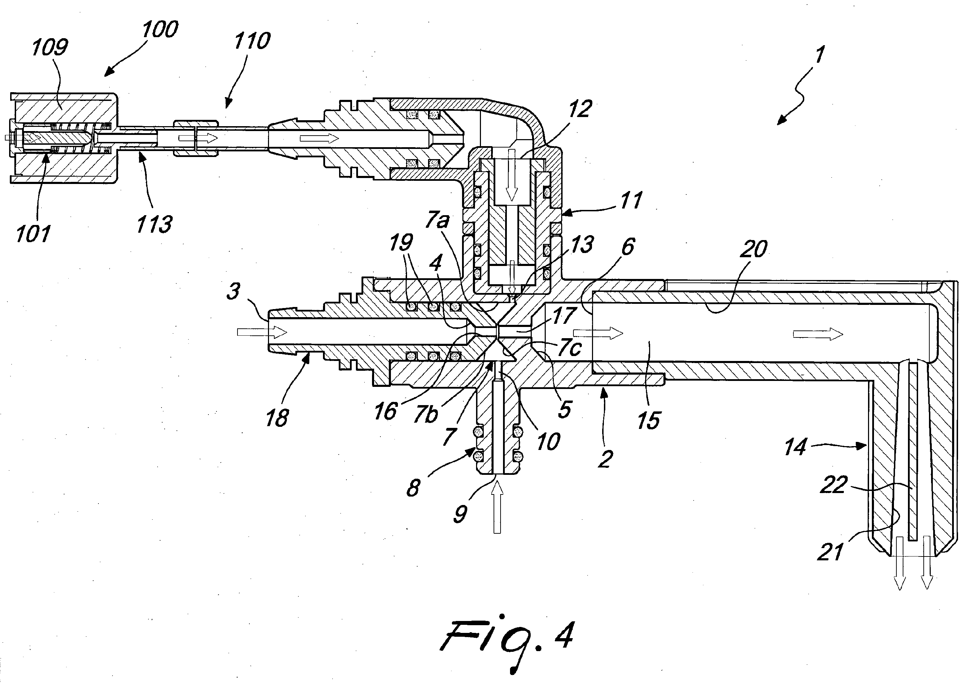

Figure 4 is a sectional side elevation view of the device illustrated in Figure 1 in a configuration for preparing hot beverages with froth;

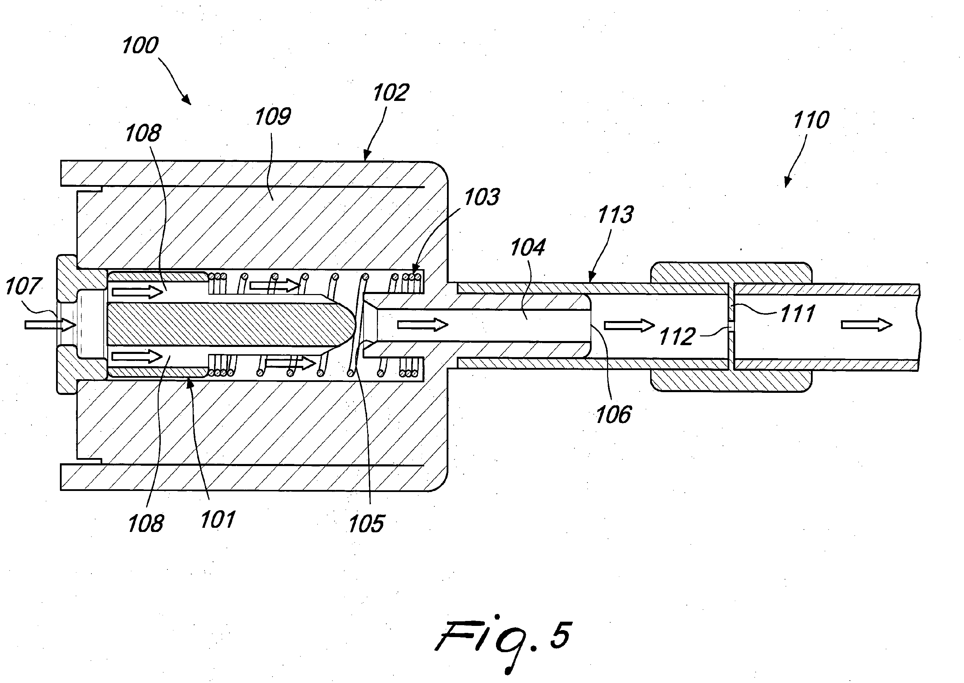

Figure 5 is an enlarged-scale view of a detail of the flow control means of the device illustrated in Figure 4;

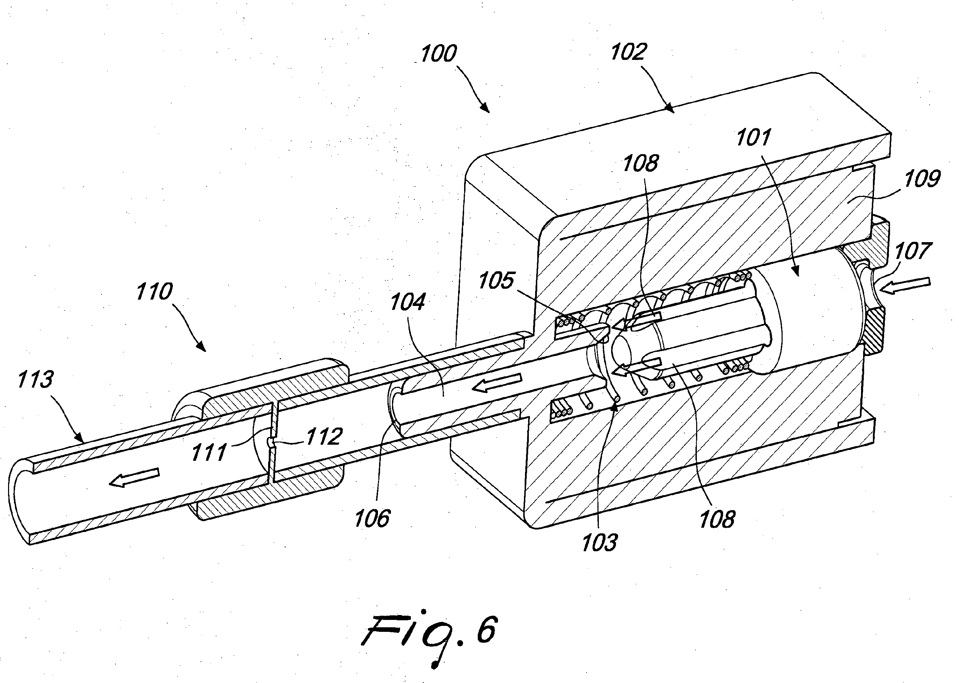

Figure 6 is a partially sectional perspective view of the flow control means illustrated in Figure 5 in their configuration for preparing hot beverages with froth;
Figure 7 is a sectional side elevation view of a variation of the device illustrated in Figure 6 in the configuration for preparing hot beverages with froth.

With reference to the figures, a mixing, heating and/or frothing device for machines for preparing hot beverages, particularly for preparing cappuccino, is generally designated by the reference numeral 1.

The device 1 comprises a tubular body 2, which defines internally a Venturi tube that comprises an inlet end 3, a converging portion 4, a diverging portion 5 and an outlet end 6.

The inlet end 3 can be associated with a source of steam such as, for example, a boiler, a pressurized boiler or an instantaneous heat exchanger (Termoblock).

The flow of steam passes through the Venturi tube along the direction indicated by the illustrated arrows.

Between the converging portion 4 and the diverging portion 5 a chamber 7 is defined for mixing the milk with the steam and optionally with air drawn from the outside environment.

The device 1 comprises, moreover, at least one duct 8 for feeding milk that has a draft port 9 that can be associated with a milk reservoir, not illustrated, and an inlet port 10 for the milk that leads into the mixing chamber 7.

The milk is drawn from the reservoir into the mixing chamber 7 due to the partial vacuum created by the acceleration of the flow of steam between the converging portion 4 and the diverging portion 5.

The device 1 comprises, moreover, at least one duct 11 for feeding ambient air that has an inlet 12 adapted to be connected to the outside environment and an inlet 13 for the air that leads into the mixing chamber 7.

Also in this case, the air is drawn from outside into the mixing chamber 7 due to the partial vacuum created by the acceleration of the flow of steam between the converging portion 4 and the diverging portion 5.

A dispenser 14 for the milk that has been heated and/or frothed into the mixing chamber 7 is associated with the end of the tubular body 2 at which the outlet end 6 of the Venturi tube leads out.

A chamber 15 for compacting the heated and/or frothed milk that exits from the mixing chamber 7 is defined between the diverging portion 5 and the dispenser 14.

The duct 8 for feeding the milk and the duct 11 for feeding the air are connected to the tubular body 2 and are arranged substantially at right angles to the longitudinal axis of the Venturi tube and are mutually offset with respect to the direction of the flow of steam.

In particular, the inlet port 10 of the milk is offset backwards with respect to the inlet 13 of the air.

The mixing chamber 7 is defined by a cylindrical portion 7a, which is formed inside the tubular body 2 and is hollow and coaxial to the Venturi tube, and by two surfaces 7b and 7c, which have a substantially frustum-like shape and face, in a mutually opposite arrangement, the inside of the cylindrical portion 7a.

The two frustum-shaped surfaces 7b and 7c are arranged substantially coaxially to the cylindrical portion 7a and have the respective smaller end faces mutually juxtaposed and adjacent at a preset distance.

The inlet port 10 of the milk and the inlet 13 of the air are defined at the lateral surface of the cylindrical portion 7a.

The smaller end faces of the two frustum-shaped surfaces 7b and 7c that are mutually juxtaposed define the region at which the drawn milk and air meet.

The annular volume that forms at the peripheral part of said region defines the space within which, due to turbulent motions, the milk is frothed by the air, forming froth.

The Venturi tube comprises a first tubular portion 16, which connects the converging portion 4 to the mixing chamber 7, and a second tubular portion 17, which connects the mixing chamber 7 to the diverging portion 5.

The first tubular portion 16 and the second tubular portion 17 are substantially mutually coaxial and the first one has an inside diameter that is smaller than the inside diameter of the second one.

The outlet end of the first tubular portion 16 and the inlet end of the second tubular portion 17 are defined at the smaller end faces of the two frustum-shaped surfaces 7b and 7c that are mutually juxtaposed.

In the embodiment illustrated in the accompanying figures, the inlet end 3, the converging portion 4 and the first tubular portion 16 of the Venturi tube are defined in a nozzle 18.

The nozzle 18 has an end inserted in a removable manner inside the tubular body 2 with the interposition of gasket rings 19 and an opposite end that protrudes from the tubular body 2 and is provided with means for coupling or engagement with a machine for preparing hot beverages.

The end of the nozzle 18 that is inserted in the tubular body 2 is frustum-shaped so as to define the frustum-shaped surface 7b.

The other frustum-shaped surface 7c is instead defined on one face of a partition that is formed inside the tubular body 2 and is crossed by the second tubular portion 17.

The diverging portion 5 is formed on the opposite face of said partition.

The dispenser 14 is associated with the tubular body 2 so as it can be removed and comprises an internal cavity 20 that defines, in association with the tubular body 2, the compaction chamber 15 and is connected to an outflow channel 21 for the hot and/or frothed milk.

The outflow channel 21 is crossed by at least a longitudinal wing 22 that improves the outflow of the milk by contributing to give the effect of "cream" to the frothed milk.

Both the nozzle 18 and the dispenser 14 are coupled to the tubular body 2 by interlocking coupling or by means of other temporary couplings known to the person skilled in the art. In particular, both the nozzle 18 and the dispenser 14 have an end that can be inserted substantially snugly in a corresponding open end of the tubular body 2, reference notches or tabs being moreover provided.

According to the invention, the device 1 comprises flow control means 100 with automatic actuation for the ambient air, which are associated with the air feeding duct 11 in order to open and close the channel for the passage of said air in the direction of the mixing chamber 7.

More specifically, the flow control means 100 comprise a slotted piston 101, which is accommodated so that it can slide in a cylindrical body 102, which is connected to the air feeding duct 11 by means of a connecting duct 104, which extends from an inlet hole 105 defined inside the cylindrical body 102 to an outlet hole 106, which is defined externally to the cylindrical body 102 and is connected to the air feeding duct 11.

In the open configuration, the air is drawn into the mixing chamber 7 due to the partial vacuum created by the acceleration of the flow of steam in the converging portion 4 of the Venturi tube, so that the milk drawn into the mixing chamber 7, besides being heated by the steam, is also emulsified with the drawn air and therefore frothed, forming froth.

In the closure configuration, any entry of air into the mixing chamber 7 is prevented, so that the milk drawn into the mixing chamber 7 is only heated by the steam and not frothed as well.

More precisely, the slotted piston 101 can move, in contrast with the action of elastic means 103, provided for example by a helical spring, which are interposed between the slotted piston 101 and the inlet hole 105, from an open position, in which the slotted piston 101 is spaced from the connecting duct 104, to a closure position, in which the slotted piston 101 is in contact with the connecting duct 104 to block the inlet hole 105.

In the embodiment illustrated in the accompanying figures, the cylindrical body 102 has an intake port 107 for air, for its passage through the slots 108 of the slotted piston 101 from the outside environment to the connecting duct 104.

Moreover, advantageously, at least one solenoid 109 is provided which is accommodated inside the cylindrical body 102 and fitted on the slotted piston 101.

More precisely, the slotted piston 101 is made of a ferromagnetic material to move it from the open position to the closure position following the generation of an electromagnetic field generated by the solenoid 109 when it is supplied with electric power.

In a possible variation of the device 1, the slotted piston 101 may be actuated by way of suitable mechanical means.

Moreover, means 110 are comprised for calibrating the air flow between the cylindrical body 102 and the air feeding duct 11 and comprise a partition 111 that has a calibrated hole 112.

More precisely, the partition 111 is accommodated inside a connecting tube 113 which is interposed between the connecting duct 104 and the air feeding duct 11.

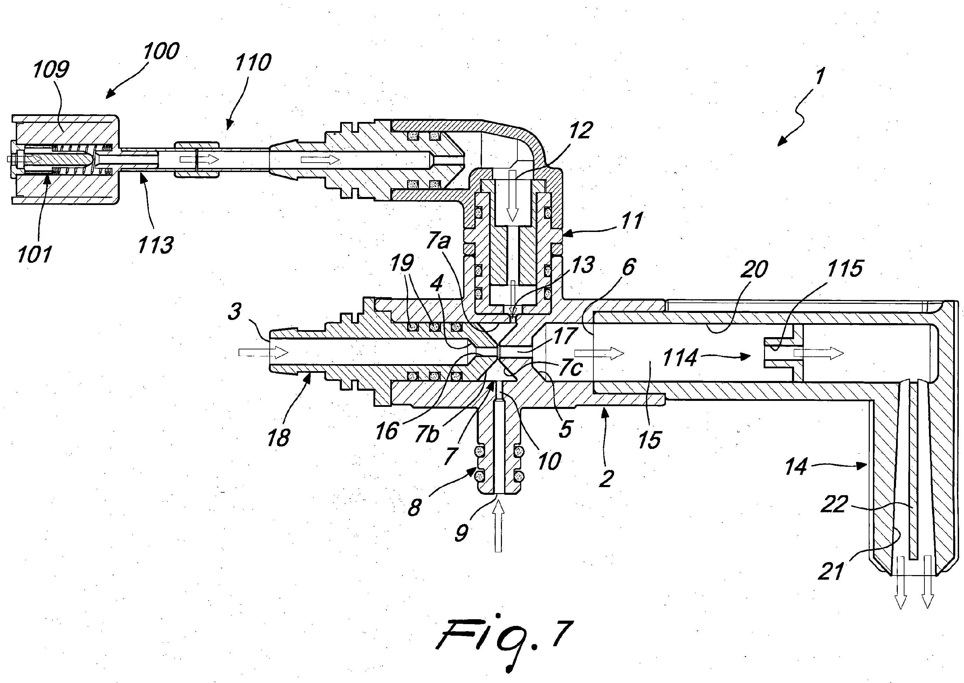

In a variation of the device 1 shown in Figure 7, stabilization means 114 are provided for stabilizing the heated and/or frothed beverage that passes through the compaction chamber 15.

More precisely, the stabilization means 114 comprise a throttling 115 of the passage section of the heated and/or frothed beverage in the compaction chamber 15, provided for example by a perforated plug, for the constant yield of the flow of the heated and/or frothed beverage from the dispenser 14.

Operation of the mixing, heating and/or frothing device 1 for machines for preparing hot beverages, particularly for preparing cappuccino, is as follows.

The device 1 is applied to any machine for producing hot beverages that is provided with a source of steam at high temperature; this application is facilitated by the coupling or interlocking means formed at the end of the nozzle 18.

The source of steam is connected to the inlet end 3, while the duct 8 for feeding milk is connected, by means of a tube fitted therein, to a reservoir or container for milk.

If one wishes to prepare warm milk without froth, the slotted piston 101 is arranged in the closed configuration, in which it affects the inlet hole 105, preventing the inflow of air from the outside into the mixing chamber 7.

In this configuration, the flow of steam that passes through the Venturi tube undergoes, in passing through the converging portion 4, such an acceleration as to create a partial vacuum that is sufficient to draw the milk into the mixing chamber 7.

The milk thus drawn combines with the steam, becoming warm, and after passing through the compaction chamber 15 is dispensed through the outflow channel 21 of the dispenser 14.

If one wishes to obtain frothed warm milk, i.e., with froth, in the absence of current, by way of the elastic means 103 the slotted piston 101 is disengaged from the inlet hole 105, moving it to an open configuration, connecting the duct 11 for feeding air to the outside environment.

In this case, the partial vacuum generated by the acceleration that the flow of steam undergoes in passing through the converging portion 4 is such as to draw into the mixing chamber 7 not only the milk but also the air.

The milk and the air mix with the steam, forming froth. The milk thus frothed and heated passes through the compaction chamber 15, where it re-compacts, in order to be then dispensed through the outflow channel 21 of the dispenser 14.

More precisely, if the stabilization means 114 are provided, the flow of frothed and/or heated milk is slowed, allowing the formation of a buffer upstream of the throttling 115, which ensures a constant dispensing of the beverage.

It is noted that the cleaning operations of the device 1 are particularly simple and effective; it is in fact sufficient to draw water instead of milk through the feeding duct 8 in order to obtain, thanks to the heat of the flow of steam, complete removal of every residue of milk and any particle of dirt.

Moreover, it must be noted that residues of milk do not build up outside the device 1; the heating and frothing of the milk in fact occur inside the device 1.

In practice it has been found that the described mixing, heating and/or frothing device for machines for preparing hot beverages, particularly for preparing cappuccino, achieves the intended aim and objects.

The device according to the invention allows, in fact, to obtain hot and/or frothed milk at a degree and a level that are constant and independent of the sensitivity and experience of the operator, operating in a totally autonomous manner.

The device according to the invention is easy to use and does not require particular manual skill of the operator; it is in fact sufficient to actuate manually or by means of an adapted keypad arranged on the machine the flow control means in order to obtain a beverage with or without froth.

The device according to the invention, moreover, is flexible and versatile in use; in fact, it can be applied to any machine without particular constructive constraints and without requiring particular structural modifications; moreover, it can operate arranged in any orientation.

Finally, the device according to the invention ensures a high degree of hygiene and sterilization.

The mixing, heating and/or frothing device for machines for preparing hot beverages, particularly for preparing cappuccino, thus conceived is susceptible of numerous modifications and variations, all of which are within the scope of the appended claims.

All the details may further be replaced with other technically equivalent elements.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mixing, heating and/or frothing device (1) for machines for preparing hot beverages, particularly for preparing cappuccino, comprising a tubular body (2) which defines internally a Venturi tube which extends from an inlet end (3), which can be associated with a source of steam, to an outlet end (6), which has at least one dispensing nozzle (14) for dispensing the beverage, a mixing chamber (7) being defined between the converging portion (4) and the diverging portion (5) of said Venturi tube and being connected to at least one duct for feeding a beverage (8) to be frothed and to at least one duct (11) for feeding ambient air which is drawn into said mixing chamber (7) due to the partial vacuum created by the flow of said steam between said converging portion (4) and said diverging portion (5) in order to emulsify said beverage to be frothed, said ducts (8, 11) being substantially transverse to said tubular body (2) and said beverage to be frothed and said air being drawn into said mixing chamber (7) due to the partial vacuum created by the flow of steam between said converging portion (4) and said diverging portion (5), and further comprising flow control means (100) with automatic actuation for said ambient air, which are associated with said air feeding duct (11) to open and close the channel for the passage of said air in the direction of said mixing chamber (7), **characterized in that** said flow control means comprise a slotted piston (101), which is accommodated slidingly in a cylindrical body (102) which is connected to said air feeding duct, means (110) being provided for calibrating the air flow between said cylindrical body (102) and said air feeding duct (11), said slotted piston being provided with slots (108) that allow air to pass from the outside environment to a connecting duct that connects said cylindrical body (102) to said air feeding duct (11), said calibration means comprising a partition (111) which has a calibrated hole (112) and is accommodated inside a connecting tube (113) which is interposed between said connecting duct (104) and said air feeding duct (11).

2. The device (1) according to claim 1, **characterized in that** said connecting duct (104) extends from an inlet hole (105) defined inside said cylindrical body (102) to an outlet hole (106), which is defined externally with respect to said cylindrical body (102) and is connected to said air feeding duct (11), said cylindrical body (102) having an intake port (107) for air, for its passage through the slots (108) of said slotted piston (101) from the outside environment to said connecting duct (104).

3. The device (1) according to claim 2, **characterized in that** said slotted piston (101) can move, in contrast with the action of elastic means (103) interposed between said slotted piston (101) and said inlet hole (105), from an open position, in which said slotted piston (101) is distant from said connecting duct (104), to a closed position, in which said slotted piston (101) is in contact with said connecting duct (104) to block said inlet hole (105).

4. The device (1) according to one or more of the preceding claims, **characterized in that** it comprises at least one solenoid (109) which is accommodated inside said cylindrical body (102) and is fitted on said slotted piston (101), said slotted piston (101) being made of a ferromagnetic material for its movement from said open position to said closed position following the generation of an electromagnetic field generated by said at least one solenoid (109) when it is supplied with electric power.

5. The device (1) according to one or more of the preceding claims, **characterized in that** it comprises a dispenser (14) of the beverage heated and/or frothed in said mixing chamber (7), which is associated with said tubular body (2) downstream, in the direction of the stream of said steam, with respect to said outlet end (6) of the Venturi tube.

6. The device (1) according to claim 5 **characterized in that** it comprises a chamber (15) for compacting the heated and/or frothed beverage which is defined between said diverging portion (5) and said dispenser (14) by a cylindrical portion (20) which is hollow and substantially coaxial to said Venturi tube.

7. The device (1) according to claim 5 or 6,
**characterized in that** said dispenser (14) comprises at least one longitudinal wing (22) which passes through the outflow channel (21) of said dispenser (14).

8. The device (1) according to claim 6, **characterized in that** it comprises means (114) for stabilizing the heated and/or frothed beverage that passes through said compaction chamber (15).

9. The device (1) according to claim 8, **characterized in that** said stabilization means (114) comprise a throttling (115) of the passage section of the heated and/or frothed beverage in said compaction chamber (15) for the constant yield of the stream of the heated and/or frothed beverage from said dispenser (14).

10. A machine for preparing hot beverages such as cappuccino or the like, comprising a source of steam with which a device (1) according to one or more of claims 1 to 9 is associated.

## Patentansprüche

1. Eine Vorrichtung (1) zum Mischen, Aufwärmen und/oder Aufschäumen für Maschinen zur Zubereitung heißer Getränke, insbesondere zur Herstellung von Cappuccino, umfassend einen rohrförmigen Körper (2), welcher innen ein Venturirohr bestimmt, das sich von einem Einlass-Ende (3), das mit einer Dampfquelle verbunden werden kann, zu einem Auslassende (6) hin erstreckt, das mindestens eine Abgabedüse (14) für die Abgabe des Getränks hat, eine Mischkammer (7), die zwischen dem konvergierenden Abschnitt (4) und dem divergierenden Abschnitt (5) des Venturirohrs bestimmt ist und die mit mindestens einer Leitung für die Zufuhr eines aufzuschäumenden Getränks (8) und mit mindestens einer Leitung (11) für die Zufuhr von Umgebungsluft verbunden ist, die aufgrund des Unterdrucks, der durch die Strömung des Dampfs zwischen dem konvergierenden Abschnitt (4) und dem divergierenden Abschnitt (5) erzeugt wird, in die Mischkammer (7) gezogen wird, um das aufzuschäumende Getränk zu emulgieren, wobei die Leitungen (8, 11) im Wesentlichen quer zu dem rohrförmigen Körper (2) verlaufen und das aufzuschäumende Getränk und die Luft in die Mischkammer (7) aufgrund des Unterdrucks gezogen werden, der durch die Strömung von Dampf zwischen dem konvergierenden Abschnitt (4) und dem divergierenden Abschnitt (5) erzeugt wird; und desweiteren umfassend Durchflussregelungsmittel (100) mit automatischer Betätigung für die Umgebungsluft, die mit der Luftzufuhrleitung (11) verbunden sind, um den Kanal für den Durchfluss der Luft in die Richtung der Mischkammer (7) zu öffnen und zu schließen, **dadurch gekennzeichnet, dass** die Durchflussregelungsmittel einen geschlitzten Kolben (101) umfassen, der verschiebbar in einem zylindrischen Körper (102) untergebracht ist, welcher mit der Luftzufuhrleitung verbunden ist, wobei Mittel (110) bereitgestellt sind, um die Luftströmung zwischen dem zylindrischen Körper (102) und der Luftzufuhrleitung (11) zu kalibrieren, wobei der geschlitzte Kolben mit Schlitzen (108) versehen ist, die es der Luft ermöglichen, von der äußeren Umgebung in eine Verbindungsleitung zu strömen, die den zylindrischen Körper (102) mit der Luftzufuhrleitung (11) verbindet, wobei die Kalibriermittel eine Trennwand (111) umfassen, die eine kalibrierte Öffnung (112) hat und in einem Anschlussrohr (113) untergebracht ist, welches zwischen der Verbindungsleitung (104) und der Luftzufuhrleitung (11) angebracht ist.

2. Die Vorrichtung (1) gemäß Anspruch 1, **dadurch gekennzeichnet, dass** die Verbindungsleitung (104) sich von einer Einlassöffnung (105), die in dem zylindrischen Körper (102) bestimmt ist, zu einer Auslassöffnung (106) hin erstreckt, die außerhalb des zylindrischen Körpers (102) bestimmt und mit der Luftzufuhrleitung (11) verbunden ist, wobei der zylindrische Körper (102) eine Einlassöffnung (107) für Luft, zum Zwecke ihres Durchflusses durch die Schlitze (108) des geschlitzten Kolbens (101) von der äußeren Umgebung zu der Verbindungsleitung (104), hat.

3. Die Vorrichtung (1) gemäß Anspruch 2, **dadurch gekennzeichnet, dass** der geschlitzte Kolben (101) sich, im Kontrast zur Arbeit elastischer Mittel (103), die zwischen dem geschlitzten Kolben (101) und der Einlassöffnung (105) angeordnet sind, aus einer offenen Position, in welcher der geschlitzte Kolben (101) von der Verbindungsleitung (104) entfernt ist, in eine geschlossene Position bewegen kann, in der der geschlitzte Kolben (101) in Kontakt mit der Verbindungsleitung (104) steht, um die Einlassöffnung (105) zu blockieren.

4. Die Vorrichtung (1) gemäß einem oder mehreren der obigen Ansprüche, **dadurch gekennzeichnet, dass** sie mindestens ein Solenoid (109) umfasst, das in dem zylindrischen Körper (102) untergebracht und auf den geschlitzten Kolben (101) aufgesetzt ist, wobei der geschlitzte Kolben (101) aus einem ferromagnetischen Material besteht, zum Zwecke seiner Bewegung aus der offenen Position in die geschlossene Position entsprechend der Erzeugung eines elektromagnetischen Feldes, das von dem mindestens einen Solenoiden (109) erzeugt wird, wenn er mit elektrischem Strom versorgt wird.

5. Die Vorrichtung (1) gemäß einem oder mehreren der obigen Ansprüche, **dadurch gekennzeichnet, dass** sie einen Spender (14) für das Getränk umfasst, das in der Mischkammer (7) erhitzt und/oder aufgeschäumt wird, der mit dem rohrförmigen Körper (2) stromabwärts, in Richtung des Dampfstroms, mit Bezug auf das Auslassende (6) des Venturirohrs, verbunden ist.

6. Die Vorrichtung (1) gemäß Anspruch 5, **dadurch gekennzeichnet, dass** sie eine Kammer (15) zum Verdichten des erhitzten und/oder aufgeschäumten Getränks umfasst, die zwischen dem divergierenden Abschnitt (5) und dem Spender (14) von einem zylindrischen Abschnitt (20) bestimmt wird, der hohl und im Wesentlichen koaxial mit dem Venturirohr ist.

7. Die Vorrichtung (1) gemäß Anspruch 5 oder 6, **dadurch gekennzeichnet, dass** der Spender (14) mindestens einen länglichen Flügel (22) umfasst, der durch den Ausflusskanal (21) des Spenders (14) verläuft.

8. Die Vorrichtung (1) gemäß Anspruch 6, **dadurch gekennzeichnet, dass** sie Mittel (114) umfasst, um das erhitzte und/oder aufgeschäumte Getränk zu stabilisieren, das durch die Verdichtungskammer (15) läuft.

9. Die Vorrichtung (1) gemäß Anspruch 8, **dadurch gekennzeichnet, dass** die Stabilisierungsmittel (114) eine Drosselung (115) des Durchflussabschnitts des erhitzten und/oder aufgeschäumten Getränks in der Verdichtungskammer (15) umfassen, zum Zwecke der konstanten Ausbeute des Stroms des erhitzten und/oder aufgeschäumten Getränks von dem Spender (14).

10. Eine Maschine für die Herstellung von Heißgetränken, wie zum Beispiel Cappuccino oder dergleichen, die eine Dampfquelle umfasst, mit der eine Vorrichtung (1) gemäß einem oder mehreren der Ansprüche 1 bis 9 verbunden ist.

## Revendications

1. Dispositif de mélange, de chauffage et/ou de formation de mousse (1) pour des machines servant à préparer des boissons chaudes, en particulier pour la prépareration de cappuccino, dispositif comprenant un corps tubulaire (2) définissant, à l'intérieur, un tube de Venturi qui s'étend depuis une extrémité d'entrée (3) pouvant être associée à une source de vapeur, à une extrémité de sortie (6) présentant au moins une buse de distribution (14) servant à distribuer la boisson, une chambre de mélange (7) étant définie entre la portion convergente (4) et la portion divergente (5) dudit tube de Venturi et reliée à au moins un conduit (8) servant à amener une boisson à mousser et à au moins un conduit (11) servant à amener de l'air ambiant qui est aspiré dans ladite chambre de mélange (7) grâce au vide partiel créé par le flux de ladite vapeur entre ladite portion convergente (4) et ladite portion divergente (5) de façon à émulsifier ladite boisson à mousser, lesdits conduits (8, 11) étant essentiellement transversaux par rapport audit corps tubulaire (2) et à ladite boisson à mousser et audit air aspiré dans ladite chambre de mélange (7) grâce au vide partiel créé par le flux de vapeur entre ladite portion convergente (4) et ladite portion divergente (5), et comprenant, en outre, des moyens de commande de flux (100) avec actionnement automatique pour ledit air ambiant, moyens qui sont associés audit conduit d'amenée d'air (11) pour ouvrir et fermer le canal au passage dudit air en direction de ladite chambre de mélange (7), **caractérisé en ce que** lesdits moyens de commande de flux comprennent un piston à fentes (101) logé coulissant dans un corps cylindrique (102) qui est relié audit conduit d'amenée d'air, des moyens (110) étant prévus pour calibrer le flux d'air entre ledit corps cylindrique (102) et ledit conduit d'amenée (11), les fentes (108), dont le piston est pourvu, permettent à l'air de passer depuis l'environnement extérieur à un conduit de raccordement reliant ledit corps cylindrique (102) audit conduit d'amenée d'air (11), lesdits moyens de calibration comprenant une cloison (111) qui présente un orifice calibré (112) et qui est logé à l'intérieur d'un tube de raccordement (113) interposé entre ledit conduit de raccordement (104) et ledit conduit d'amenée d'air (11).

2. Dispositif (1) suivant la revendication 1, **caractérisé en ce que** ledit conduit de raccordement (104) s'étend depuis un orifice d'entrée (105), défini à l'intérieur dudit corps cylindrique (102), à un orifice de sortie (106) qui est défini à l'extérieur par rapport audit corps cylindrique (102) et relié audit conduit d'amenée d'air (11), ledit corps cylindrique (102) ayant un orifice d'admission (107) pour l'air, pour son passage à travers les fentes (108) dudit piston à fentes (101) depuis l'environnement extérieur audit conduit de raccordement (104).

3. Dispositif (1) suivant la revendication 2, **caractérisé en ce que** ledit piston à fentes (101) peut se déplacer de façon contraire à l'action de moyens élastiques (103) interposés entre ledit piston à fentes (101) et ledit orifice d'entrée (105), depuis une position ouverte, dans laquelle ledit piston à fentes (101) est distant par rapport audit conduit de raccordement (104), à une position fermée, dans laquelle le piston à fentes (101) est en contact avec ledit conduit de raccordement (104) pour bloquer ledit orifice d'entrée (105).

4. Dispositif (1) suivant une ou plusieurs des revendications précédentes, **caractérisé en ce qu'**il comprend au moins un solénoïde (109) qui est logé à l'intérieur dudit corps cylindrique (102) et placé sur ledit piston à fentes (101), ledit fiston à fentes (101) étant fabriqué en un matériau ferromagnétique pour son mouvement depuis ladite position ouverte à ladite position fermée après la génération d'un champ électromagnétique par ledit au moins un solénoïde (109) lorsque celui-ci est alimenté en courant électrique.

5. Dispositif (1) suivant une ou plusieurs des revendications précédentes, **caractérisé en ce qu'**il comprend un distributeur (14) de la boisson chauffée et/ou moussée dans ladite chambre de mélange (7) qui est associée audit corps tubulaire (2) en aval, dans la direction du courant de ladite vapeur par rapport à ladite extrémité de sortie (6) du tube de Venturi.

6. Dispositif (1) suivant la revendication 5, **caractérisé en ce qu'**il comprend une chambre (15) servant à compacter la boisson chauffée et/ou moussée qui est définie entre ladite portion divergente (5) et ledit distributeur (14) par une portion cylindrique (20) qui est creuse et essentiellement coaxiale par rapport audit tube de Venturi.

7. Dispositif (1) suivant la revendication 5 ou 6, **caractérisé en ce que** ledit distributeur (14) comprend au moins une aile longitudinale (22) qui passe à travers le canal de sortie (2) dudit distributeur (14).

8. Dispositif (1) suivant la revendication 6, **caractérisé en ce qu'**il comprend des moyens (114) servant à stabiliser la boisson chauffée et/ou moussée passant à travers ladite chambre de compactage (15).

9. Dispositif (1) suivant la revendication 8, **caractérisé en ce que** lesdits moyens de stabilisation (114) comprennent un étranglement (115) de la section de passage de la boisson chauffée et/ou moussée dans ladite chambre de compactage (15), étranglement servant au rendement constant du courant de la boisson chauffée et/ou moussée depuis ledit distributeur (14).

10. Machine servant à la préparation de boissons chaudes, telles que du cappuccino ou similaire, comprenant une source de vapeur, à laquelle est associé un dispositif (1) suivant une ou plusieurs des revendications 1 à 9.
